(19) Europäisches Patentamt / European Patent Office / Office européen des brevets

(11) **EP 4 603 200 A1**

(12) **EUROPEAN PATENT APPLICATION**
published in accordance with Art. 153(4) EPC

(43) Date of publication:
**20.08.2025 Bulletin 2025/34**

(21) Application number: **23907467.7**

(22) Date of filing: **24.11.2023**

(51) International Patent Classification (IPC):
**B21B 37/24** (2006.01)  **B21B 37/46** (2006.01)
**B21B 38/00** (2006.01)  **H01M 4/04** (2006.01)

(52) Cooperative Patent Classification (CPC):
**H01M 4/0435;** B21B 37/16; B21B 37/58;
B21B 38/006; B21B 2275/06

(86) International application number:
**PCT/KR2023/019155**

(87) International publication number:
**WO 2024/136181 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022 KR 20220183576**
**02.03.2023 KR 20230027508**

(71) Applicant: **LG Energy Solution, Ltd.**
**Seoul 07335 (KR)**

(72) Inventors:
• **KIM, Min Ki**
**Daejeon 34122 (KR)**

• **KIM, Beom Su**
**Daejeon 34122 (KR)**
• **CHOI, Nak Won**
**Daejeon 34122 (KR)**
• **SONG, Youngwan**
**Daejeon 34122 (KR)**
• **CHOY, Sang Hoon**
**Daejeon 34122 (KR)**
• **SEOL, Jeong Soo**
**Daejeon 34122 (KR)**
• **PARK, Keum Yong**
**Daejeon 34122 (KR)**

(74) Representative: **Plasseraud IP**
**104 Rue de Richelieu**
**CS92104**
**75080 Paris Cedex 02 (FR)**

(54) **METHOD FOR ROLLING ELECTRODE**

(57) A method for rolling an electrode according to one embodiment of the present disclosure includes the steps of: (a) measuring the temperature and speed of the rolling roll; (b) deriving a target load value under the measured temperature and speed; and (c) rolling the electrode with the target load value, wherein the target load value is a load value for realizing a desired electrode thickness at the time of rolling the electrode.

【FIG. 4】

S100

S110 — Measuring the temperature and speed of the rolling roll

S120 — Deriving a target load value under the measured temperature and speed

Summing up load values according to the amount of change in back pressure — S121

S130 — Rolling the electrode with the target load value

EP 4 603 200 A1

**Description**

**[TECHNICAL FIELD]**

Cross Citation with Related Application(s)

This application claims the benefit of Korean Patent Application No. 10-2022-0183576 filed on December 23, 2022 and Korean Patent Application No. 10-2023-0027508 filed on March 2, 2023 in the Korean Intellectual Property Office, the disclosures of which are incorporated herein by reference in their entirety.

The present disclosure relates to a method for rolling an electrode, and more specifically, to a method for rolling an electrode that derives a target load for realizing the desired electrode thickness at the time of rolling an electrode.

**[BACKGROUND]**

The secondary battery can be formed by inserting an electrode assembly composed of a cathode plate, an anode plate and a separator into a case, and then sealing the case. A cathode plate or an anode plate (hereinafter, referred to as "electrode plate") can be configured by coating an active material slurry onto a cathode current collector or an anode current collector to a predetermined thickness, interposing a separator between the cathode current collector and the anode current collector, and winding the electrode plate in a jelly-roll shape many times or laminating it in a plurality of layers to form an electrode assembly.

The manufacturing process of the secondary battery largely includes the electrode process, wherein the electrode process is divided into an active material mixing process, an active material coating process, a rolling process, a slitting process, a winding process, and the like. More specifically, the electrode plate may be formed of a coated portion coated with the active material slurry and an uncoated portion not coated with the active material slurry. A rolling process of rolling the electrode plate can be included so as to increase the adhesiveness between the coated active material slurry and the electrode current collector and increases the volume density of the active material. The rolled electrode plate can be used by passing through a cutter having a certain width after drying and cutting into a predetermined size.

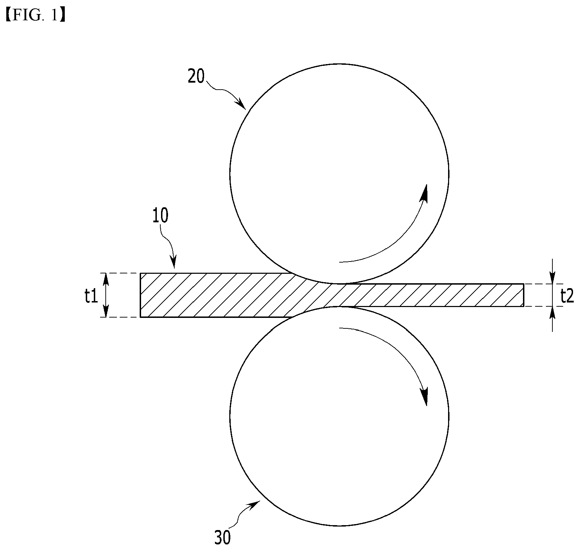

FIGS. 1 to 3 are conceptual diagrams showing a rolling apparatus for explaining an electrode rolling process.

Referring to FIG. 1, a rolling apparatus for rolling an electrode includes a pair of rolling rolls 20 and 30. The thickness of the electrode 10 decreases in a process of passing between the pair of rolling rolls 20 and 30.

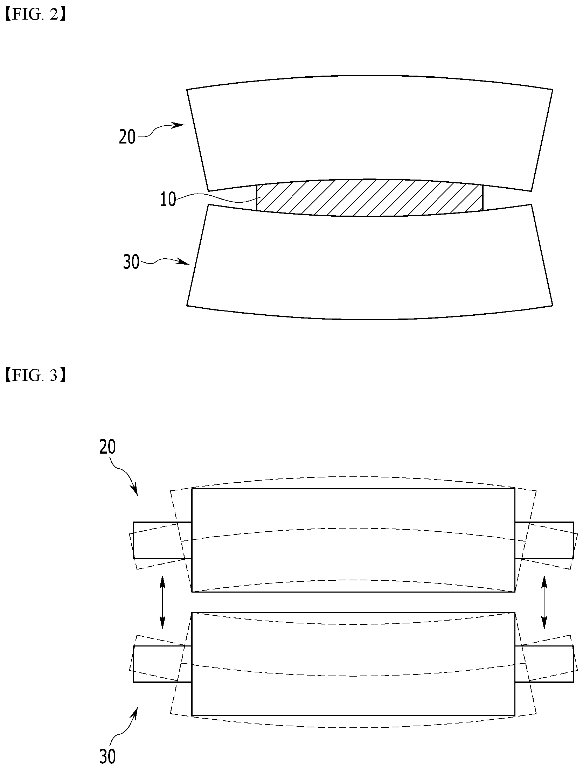

When a rolling operation is performed to manufacture a high-density electrode 10, the force (linear pressure) with which the electrode 10 tries to spread the pair of rolling rolls 20 and 30 is large, which causes bending of the rolls as shown in FIG. 2. Due to this bending deformation of the rolling rolls 20 and 30, the manufactured electrode 10 is formed thicker at the center of the width than at both side edges, which causes quality defects. In order to solve the thickness deviation in this rolling process, back pressure is applied to both ends of the pair of rolling rolls 20 and 30 to suppress bending as shown in FIG. 3.

Meanwhile, according to the prior art, after test-rolling the electrode 10, the thickness of the electrode 10 is measured, and if the desired thickness is not achieved, the steps of adjusting the gap between the rolling rolls 20 and 30, rolling the electrode and measuring the rolled electrode are repeated until the desired thickness of the electrode 10 is achieved in the rolling process.

**[DETAILED DESCRIPTION OF THE INVENTION]**

**[Technical Problem]**

It is an object of the present disclosure to provide a method for rolling an electrode so that the desired electrode thickness can be achieved more efficiently in the electrode rolling process.

However, the technical problems to be solved by embodiments of the present disclosure are not limited to the above-described problems, and can be variously expanded within the scope of the technical idea included in the present disclosure.

**[Technical Solution]**

According to one embodiment of the present disclosure, there is provided a method for rolling an electrode, comprising the steps of: (a) measuring temperature and speed of the rolling roll; (b) deriving a target load value under the measured temperature and speed; and (c) rolling the electrode with the target load value, wherein the target load value is a load value for realizing a desired electrode thickness at the time of rolling the electrode.

In the step (b) of deriving a target load value under the measured temperature and speed, the target load value may be a value that is previously set by setting each of the temperature and speed as variables.

The target load value may be a value that is previously set by adding multiplication of the temperature and speed as additional variables to the value derived using each of the temperature and speed as variables.

The target load value may be derived by further adding a previously set constant.

The target load value may be derived by substituting the measured temperature and speed into a relationship equation that is previously set by setting each of the temperature and speed as variables.

The relationship equation may have multiplication of the temperature and speed as additional variables.

The relationship equation may further have addition of a previously set constant.

The relationship equation may follow the following Mathematical Equation 1,

[Mathematical Equation 1]

$$P_1 = W \times (C_1 \times V + C_2 \times T + C_3 \times V \times T + C_4)$$

wherein, $P_1$ is the target load value, W is an electrode width, V is the speed, T is the temperature, and $C_1$, $C_2$, $C_3$ and $C_4$ are coefficients, respectively, which are any one selected from real numbers.

A table is prepared in advance in which temperature and speed are substituted for each section into the Relational Equation, and in the step (b) of deriving a target load value under the measured temperature and speed, the target load value may be derived by substituting the measured temperature and speed into the table, respectively.

The step of deriving a target load value under the measured temperature and speed may comprise a step of summing up load values according to an amount of change in back pressure when there is a change in the back pressure.

In the step of summing up load values according to the amount of change in back pressure, a constant may be added as a load value according to the amount of change in the back pressure to update the target load value.

The step of summing up load values according to the amount of change in back pressure follows the following Mathematical Equation 2,

[Mathematical Equation 2]

$$P_2 = P_1 + (C_5 \times \Delta P_b)$$

wherein, $P_1$ is a target load value according to the temperature and speed, $P_2$ is a target load value to which a load value according to the amount of change in the back pressure is summed up, $C_5$ is a coefficient, which is any one selected from real numbers, and $\Delta P_b$ is the amount of change in the back pressure.

The step (c) of rolling the electrode with the target load value further comprises test-rolling the electrode with the target load value, wherein when the test-rolled electrode is realized to the desired electrode thickness, rolling of the electrode is normally operated, and wherein when the test-rolled electrode is not realized to the desired electrode thickness, the step (b) may be performed again.

**[Advantageous Effects]**

According to the method for rolling an electrode of the present disclosure, it is possible to prevent repeating the steps of test-rolling the electrode, measuring the thickness of the rolled electrode, and adjusting the gap between the rolling rolls, because the target load at the time of rolling an electrode can be efficiently derived, and the electrode can be rolled with the target load according thereto.

Therefore, the production efficiency of the electrode assembly can be maximized, the productivity can be improved, and the manufacturing costs can be reduced. In addition, the quality of the manufactured electrode assembly can be improved.

Effects obtainable from the present disclosure are not limited to the effects mentioned above, and additional other effects not mentioned herein will be clearly understood from the description of the appended claims by those skilled in the art.

**[BRIEF DESCRIPTION OF THE DRAWINGS]**

FIGS. 1 to 3 are conceptual diagrams showing a rolling apparatus for explaining an electrode rolling process.
FIG. 4 shows a flow chart of a method for rolling an electrode according to an embodiment of the present disclosure.
FIG. 5 is an example of a table of load values according to rolling temperature and each rolling speed.

FIG. 6 schematically shows a system (apparatus) for rolling an electrode for realizing a method for rolling an electrode according to an embodiment of the present disclosure.

**[DETAILED DESCRIPTION OF THE EMBODIMENTS]**

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of some layers and regions are exaggerated.

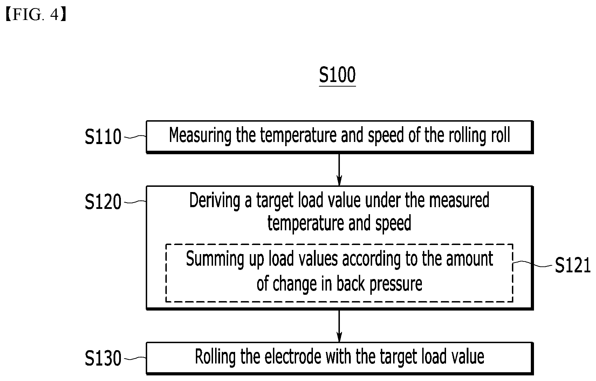

Now, a method for rolling an electrode according to one embodiment of the present disclosure will be described with reference to FIG. 4.

FIG. 4 specifically explains a method S100 for rolling an electrode according to an embodiment of the present disclosure.

The method S100 for rolling an electrode according to an embodiment of the present disclosure comprises a step S110 of measuring the temperature and speed of the rolling roll, a step S120 of deriving a target load value under the measured temperature and speed; and a step S130 of rolling the electrode with the target load value.

The electrode 10 is a sheet-shaped electrode, which may be an electrode for a secondary battery in which an electrode mixture coating layer including an electrode active material, a binder, a conductive material, and a filler is formed on one side or both sides of a current collector.

Even if the rolling rolls 20 and 30 roll the electrode 10 with the same load, the thickness of the rolled electrode 10 varies depending on the speed of the rolling rolls 20 and 30. Therefore, when the speed of the rolling rolls 20 and 30 changes, the load value for making the thickness of the rolled electrode 10 equal (constant) to a desired thickness must also change in accordance therewith.

Similarly, even if the rolling rolls 20 and 30 roll the electrode 10 with the same load, the thickness of the rolled electrode 10 varies depending on the temperature of the rolling rolls 20 and 30. Therefore, when the temperature of the rolling rolls 20 and 30 changes, the load value (target load value) for making the thickness of the rolled electrode 10 equal (constant) to a desired thickness must also be changed in accordance therewith.

Similarly, even if the rolling rolls 20 and 30 roll the electrode 10 with the same load (line pressure), when the back pressure applied to the rolling rolls 20 and 30 changes, the thickness of the rolled electrode 10 also changes. Therefore, when the back pressure of the rolling rolls 20 and 30 changes, the load value (target load value) for making the thickness of the rolled electrode 10 equal (constant) to a desired thickness must also be changed in accordance therewith.

Despite the various process environments, the thickness of the electrode 10 rolled onto the rolling rolls 20 and 30 needs to be formed to be equal (constant) to the desired thickness. According to the present disclosure, among various process environments, in particular, despite changes in the temperature, speed, and/or back pressure of the rolling rolls 20 and 30, a target load value (appropriate load value) for making the thickness of the rolled electrode 10 equal to the desired thickness is derived, and the electrode 10 is rolled with the corresponding target load value.

First, a step S110 of measuring the temperature and speed of the rolling roll is performed. A temperature sensor (not shown) is provided directly or indirectly on the rolling rolls 20 and 30 to measure the temperature of the rolling rolls 20 and 30. In addition, the speed of the rolling rolls 20 and 30 is, for example, the rotational speed of the rolling rolls 20 and 30. A speed sensor (not shown) may be provided directly or indirectly on the rolling rolls 20 and 30, or may be calculated based on a previously set moving speed of the electrode 10.

Next, a step S120 of deriving a target load value according to the measured rolling temperature and rolling speed is performed. The temperature of the rolling roll is referred to as the rolling temperature, and the speed of the rolling roll is referred to as the rolling speed. In step S120, the target load value is derived by setting the rolling temperature and rolling speed as variables. In some cases, the target load value may be derived by adding not only the rolling temperature and rolling speed but also multiplication of the rolling temperature and rolling speed.

More specifically, in step S120, for example, the target load value can be derived by substituting the temperature and speed measured in step S110 into a relational equation according to the rolling temperature, the rolling speed, and the target load value obtained by multiplying the rolling temperature and rolling speed. The relational equation according to the rolling temperature, the rolling speed, and the target load value obtained by multiplying the rolling temperature and rolling speed can be represented by the following Mathematical Equation 1. That is, the target load value $P_1$ follows the following Mathematical Equation 1. In order to distinguish it from the target load value $P_2$ derived from Mathematical Equation 2, which will be described later, for convenience of explanation, the target load value $P_1$ derived from the following Mathematical Equation 1 is referred to as the first target load value.

[Mathematical Equation 1]

$$P_1 = W \times (C_1 \times V + C_2 \times T + C_3 \times V \times T + C_4)$$

wherein, $P_1$ is a first target load value, W is the electrode width, V is the rolling speed, T is the rolling temperature, and $C_1$, $C_2$, $C_3$ and $C_4$ are coefficients, respectively, which are any one selected from real numbers.

A weight is given to the rolling speed measured in step S110 as a value of $C_1$ that matches the process environment and the electrode to be manufactured, and similarly, a weight is given to the rolling temperature measured in step S110 as a value of $C_2$ that matches the process environment and the electrode to be manufactured, thereby summing up these.

In some cases, if the multiplication of the rolling temperature and rolling speed also affects the target load value (first target load value), the weight is also given to the value of $C_3$ that matches the process environment or electrode to be manufactured, which can be then added. Further, in some cases, $C_4$ previously set to match the process environment or electrode to be manufactured can be added.

The load value ($C_3 \times V \times T$) obtained by multiplying the rolling temperature and the rolling speed is a value that can be added when an error occurs or correction is required even if the load value according to the rolling speed ($C_1 \times V$) and the load value according to the rolling temperature ($C_2 \times T$) are derived as described above. Further, $C_4$ is also a value that can be added when an error occurs or correction is required. Thereby, the target load can be realized more accurately. Of course, if multiplication of rolling temperature and rolling speed is not required, $C_3$ may be 0. Further, if correction via $C_4$ is not required, $C_4$ may be 0.

Each of $C_1$, $C_2$, $C_3$ and $C_4$ can be selected in a variety of ways depending on the type of electrode to be manufactured, process environment, and the like. For example, since the type and ratio of the active materials differ depending on the electrode to be manufactured, $C_1$, $C_2$, $C_3$ and $C_4$ values suitable therefor can be selected. In one example, $C_1$, $C_2$, $C_3$ and $C_4$ may be 0.0009, - 0.0058, 0.00007, and 1.783 in that order, respectively.

Alternatively, in step S120, the target load value (first target load value) corresponding to each rolling temperature and each rolling speed may be derived from the table. A table can be prepared by substituting the rolling temperature into Mathematical Equation 1 for each section, and similarly substituting the rolling speed for each section.

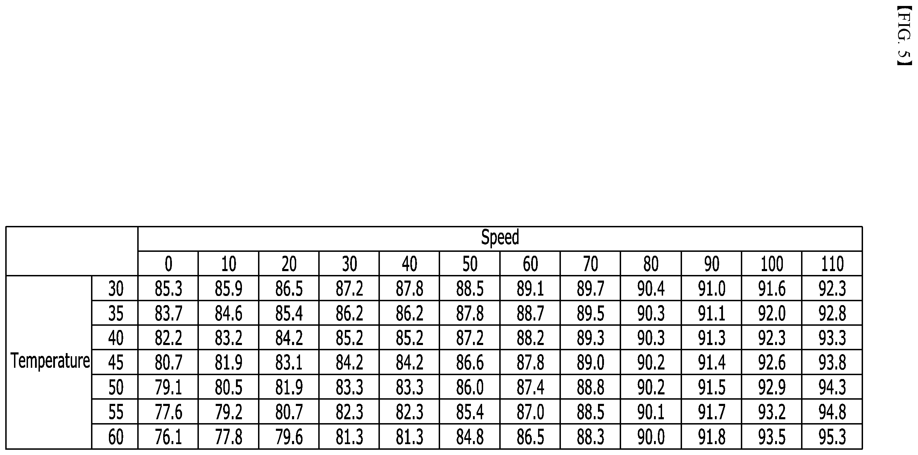

For reference, FIG. 5 is an example of a table of load values according to the rolling temperature and each rolling speed. If $C_1$, $C_2$, $C_3$ and $C_4$ are, for example, 0.0009, -0.0058, 0.00007, and 1.783 in that order, respectively, as described above, this is a case where the rolling temperature is varied by 5 degrees Celsius in the range of 30 degrees Celsius to 60 degrees Celsius and substituted into Mathematical Equation 1, and the rolling speed is substituted into Mathematical Equation 1 while changing the value by 10 m/s in the range of 0 m/s to 110 m/s, thereby deriving a table.

Step S120 may further comprise a step S121 of summing up load values according to the amount of change in back pressure when there is a change in back pressure. That is, in step S120, only the step of deriving the target load value according to the measured rolling temperature and rolling speed may be performed as described above, however, when the back pressure changes, the target load value is updated and derived by adding the load value according to the change in back pressure. For reference, the case where there is a fluctuation (change) in the back pressure are largely divided into cases where an operator manually adjusts the back pressure and the back pressure fluctuates accordingly, and cases where the back pressure fluctuates due to an automatic correction program to determine the shape of the electrode width direction and then adjust it to the desired shape.

More specifically, for example, the second target load value $P_2$ can be derived by adding a load value corresponding to the back pressure change according to the following Mathematical Equation 2 to the first target load value $P_1$ derived from Mathematical Equation 1. That is, the second target load value $P_2$ follows the following Mathematical Equation 2.

[Mathematical Equation 2]

$$P_2 = P_1 + (C_5 \times \Delta P_b)$$

wherein, $P_1$ is a first target load value, $P_2$ is a second target load value, $C_5$ is a coefficient, which is any one selected from real numbers, and $\Delta P_b$ is the amount of change in back pressure. For example, $C_5$ may vary depending on the specifications of the device (equipment) for rolling the electrode. More specifically, $C_5$ may be proportional to the value obtained by subtracting the square of the rod diameter from the square of the inner diameter of the back pressure cylinder.

In one exemplary embodiment, when the first target load value $P_1$ is 100, correction can be made so that for every 10 bar of back pressure $P_b$, 8.07 is added to 100, which is the first load value $P_1$, to derive 108.07, which is the second target load value $P_2$. At this time, when the back pressure rises by 20 bar, $8.07 \times 2$ may be added to the first target load value $P_1$. In

summary, in the exemplary embodiment, it is sufficient to multiply the amount of change in back pressure $\Delta P_b$ by 0.807 per 1 bar and add it to the first target load value $P_1$.

Next, a step S130 is performed in which the rolling roll rolls the electrode using the target load value derived in step S120. If there is no change in the back pressure of the rolling rolls 20 and 30 in step S120, the electrode 10 may be rolled using the first target load value $P_1$ derived from Mathematical Equation 1. On the other hand, when there is a change in the back pressure of the rolling rolls 20 and 30, the electrode 10 may be rolled using the second target load value $P_2$ derived from Mathematical Equation 2 in step S121.

In step S130, if necessary, test rolling may be included with the target load value derived in step S120. When the electrode is realized to the desired thickness through test rolling, the electrode rolling process may be operated normally. However, if the electrode was not realized to the desired thickness during test rolling, the process returns to step S120 and adjust at least one of $C_1$, $C_2$, $C_3$, $C_4$ and $C_5$. Thereafter, test rolling may be performed again, or if the test rolling is an adjustment to the extent that it is not required, the electrode rolling process can be operated normally.

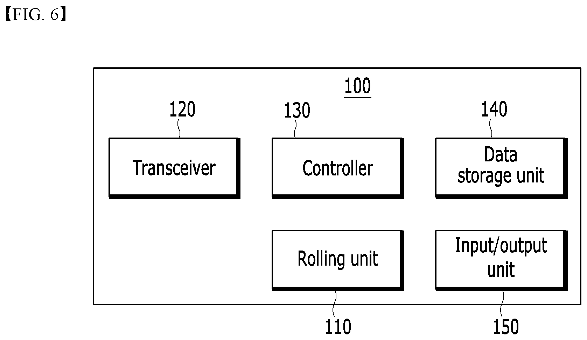

FIG. 6 schematically shows a system (apparatus) for rolling an electrode for realizing a method for rolling an electrode according to an embodiment of the present disclosure.

The method of rolling an electrode according to an embodiment of the present disclosure can be realized in a system 100 for electrode rolling including a rolling unit 110, a transceiver 120, a controller 130, and an input/output unit 150 as shown in FIG. 6.

As the rolling unit 110, a rolling apparatus commonly used in the electrode manufacturing process can be used, and therefore, a detailed illustration thereof is omitted. The rolling unit 110 may include a pair of rolling rolls 20 and 30 as shown in FIG. 1, a back pressure cylinder (not shown), various sensors (not shown), and the like. The sensor may include a temperature sensor that measures the temperature of the rolling rolls 20 and 30, a speed sensor that measures the moving speed of the electrode or the driving speed of the rolling roll, a thickness gauge that measures the thickness of rolled electrodes (e.g., Maysun thickness gauge), and the like as shown in FIG. 1. The thickness gauge can calculate the thickness of the electrode through changes in the position of the rolling rolls 20 and 30, or can directly measure the thickness of the electrode that has passed through the rolling unit, or may calculate the thickness by sensing the gap between the rolling rolls 20 and 30.

The transceiver 120 receives data transmitted from a sensor provided in the rolling unit 110 or receives data transmitted from an input/output device of an operator and transmits the data to the controller 130. Data transmitted to the controller 130 may include rolling temperature, rolling speed, and/or back pressure change (or reverse pressure) value as described above regarding the method of rolling the electrode. The controller 130 receives data on rolling temperature, rolling speed, and/or back pressure change (or reverse pressure) and derives a target load. The controller 130 derives the target load in conjunction with a data storage unit 140, which is integrated into the electrode rolling system 100 or provided externally. The data storage unit 140 may store various relational equations (Mathematical Equation 1, Mathematical Equation 2) in accordance with the type of electrode to be manufactured and/or for various environments of the process, or may store various tables (e.g., FIG. 5) corresponding to the relevant relational equations. For components related to other devices required for realizing the method for rolling an electrode according to an embodiment of the present disclosure, refer to apparatuses used in a typical electrode rolling process.

According to the method of rolling an electrode according to an embodiment of the present disclosure, loads can be calculated based on process conditions and rolled thicknesses can be targeted at once without operator intervention, unlike conventional technology in which the operator manually adjusts the rolling process parameters (gap, back pressure), confirms the rolling thickness and then repeat readjustment. Therefore, the efficiency of the electrode manufacturing process is maximized, the productivity is increased, and the manufacturing costs are reduced.

In addition, according to the method of rolling an electrode according to the embodiment of the present disclosure, the thickness of the rolled electrode can be realized to be equal (constant) to the desired thickness, thereby equalizing and improving the quality of secondary batteries including electrodes manufactured and significantly lowering the defective rate.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

[Description of Reference Numerals]

    10: electrode
    20, 30: rolling roll
    100: system for electrode rolling

110: rolling unit
120: transceiver
130: controller
140: data storage unit
150: input/output unit

**Claims**

1. A method for rolling an electrode, comprising the steps of:

   (a) measuring temperature and speed of the rolling roll;
   (b) deriving a target load value under the measured temperature and speed; and
   (c) rolling the electrode with the target load value,

   wherein the target load value is a load value for realizing a desired electrode thickness at the time of rolling the electrode.

2. The method for rolling an electrode according to claim 1, wherein:

   in the step of (b) deriving a target load value under the measured temperature and speed,
   the target load value is a value that is previously set by setting each of the temperature and speed as variables.

3. The method for rolling an electrode according to claim 2, wherein:
   the target load value is a value that is previously set by adding multiplication of the temperature and speed as additional variables to the value derived by setting each of the temperature and speed as variables.

4. The method for rolling an electrode according to claim 2, wherein:
   the target load value is derived by further adding a previously set constant.

5. The method for rolling an electrode according to claim 1, wherein:
   the target load value is derived by substituting the measured temperature and speed into a relationship equation that is previously set by setting each of the temperature and speed as variables.

6. The method for rolling an electrode according to claim 5, wherein:
   the relationship equation has multiplication of the temperature and speed as additional variables.

7. The method for rolling an electrode according to claim 5, wherein:
   the relationship equation further has addition of a previously set constant.

8. The method for rolling an electrode according to any one of claims 5 to 7, wherein:

   the relationship equation follows the following Mathematical Equation 1,

   [Mathematical Equation 1]

   $$P_1 = W \times (C_1 \times V + C_2 \times T + C_3 \times V \times T + C_4)$$

   wherein, $P_1$ is the target load value, W is an electrode width, V is the speed, T is the temperature, and $C_1, C_2, C_3$ and $C_4$ are coefficients, respectively, which are any one selected from real numbers.

9. The method for rolling an electrode according to any one of claims 5 to 7, wherein:

   a table is prepared in advance in which the temperature and speed are substituted for each section into the Relational Equation, and
   in the step of (b) deriving a target load value under the measured temperature and speed, the target load value is derived by substituting the measured temperature and speed into the table, respectively.

7

**10.** The method for rolling an electrode according to claim 1, wherein:
the step of (b) deriving a target load value under the measured temperature and speed comprises a step of summing up load values according to an amount of change in back pressure when there is a change in the back pressure.

**11.** The method for rolling an electrode according to claim 10, wherein:
in the step of summing up load values according to the amount of change in back pressure, a constant is added as a load value according to the amount of change in the back pressure to update the target load value.

**12.** The method for rolling an electrode according to claim 10, wherein:

the step of summing up load values according to the amount of change in the back pressure follows the following Mathematical Equation 2,

[Mathematical Equation 2]
$$P_2 = P_1 + (C_5 \times \Delta P_b)$$

wherein, $P_1$ is a target load value according to the temperature and speed, $P_2$ is a target load value to which a load value according to the amount of change in the back pressure is summed up, $C_5$ is a coefficient, which is any one selected from real numbers, and $\Delta P_b$ is the amount of change in the back pressure.

**13.** The method for rolling an electrode according to claim 1, wherein:

the step of (c) a step of rolling the electrode with the target load value further comprises test-rolling the electrode with the target load value,
wherein when the test-rolled electrode is realized to the desired electrode thickness, rolling of the electrode is normally operated, and
wherein when the test-rolled electrode is not realized to the desired electrode thickness, the step (b) is performed again.

【FIG. 1】

【FIG. 2】

【FIG. 3】

【FIG. 4】

S100

S110 — | Measuring the temperature and speed of the rolling roll |

S120 — | Deriving a target load value under the measured temperature and speed
Summing up load values according to the amount of change in back pressure | — S121

S130 — | Rolling the electrode with the target load value |

【FIG. 5】

| Temperature | | Speed | | | | | | | | | | | |
|---|---|---|---|---|---|---|---|---|---|---|---|---|---|
| | | 0 | 10 | 20 | 30 | 40 | 50 | 60 | 70 | 80 | 90 | 100 | 110 |
| | 30 | 85.3 | 85.9 | 86.5 | 87.2 | 87.8 | 88.5 | 89.1 | 89.7 | 90.4 | 91.0 | 91.6 | 92.3 |
| | 35 | 83.7 | 84.6 | 85.4 | 86.2 | 86.2 | 87.8 | 88.7 | 89.5 | 90.3 | 91.1 | 92.0 | 92.8 |
| | 40 | 82.2 | 83.2 | 84.2 | 85.2 | 85.2 | 87.2 | 88.2 | 89.3 | 90.3 | 91.3 | 92.3 | 93.3 |
| | 45 | 80.7 | 81.9 | 83.1 | 84.2 | 84.2 | 86.6 | 87.8 | 89.0 | 90.2 | 91.4 | 92.6 | 93.8 |
| | 50 | 79.1 | 80.5 | 81.9 | 83.3 | 83.3 | 86.0 | 87.4 | 88.8 | 90.2 | 91.5 | 92.9 | 94.3 |
| | 55 | 77.6 | 79.2 | 80.7 | 82.3 | 82.3 | 85.4 | 87.0 | 88.5 | 90.1 | 91.7 | 93.2 | 94.8 |
| | 60 | 76.1 | 77.8 | 79.6 | 81.3 | 81.3 | 84.8 | 86.5 | 88.3 | 90.0 | 91.8 | 93.5 | 95.3 |

【FIG. 6】

## INTERNATIONAL SEARCH REPORT

| International application No. |
| --- |
| **PCT/KR2023/019155** |

| A. | CLASSIFICATION OF SUBJECT MATTER |
| --- | --- |

**B21B 37/24**(2006.01)i; **B21B 37/46**(2006.01)i; **B21B 38/00**(2006.01)i; **H01M 4/04**(2006.01)i

According to International Patent Classification (IPC) or to both national classification and IPC

| B. | FIELDS SEARCHED |
| --- | --- |

Minimum documentation searched (classification system followed by classification symbols)

B21B 37/24(2006.01); B21B 37/00(2006.01); B21B 37/16(2006.01); B21B 37/46(2006.01); B21B 37/58(2006.01); B29C 55/18(2006.01); H01M 4/04(2006.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 압연 롤(rolling roll), 온도(temperature), 속도(velocity), 타겟 하중 값(target load value), 전극(electrode)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-1462332 B1 (POSCO) 14 November 2014 (2014-11-14)<br>See paragraph [0015], claims 8 and 11 and figure 6. | 1-9,13 |
| Y | | 10-12 |
| Y | KR 10-2004-0004946 A (POSCO) 16 January 2004 (2004-01-16)<br>See paragraph [0017] and figures 2 and 5. | 10-12 |
| A | KR 10-2014-0067795 A (POSCO) 05 June 2014 (2014-06-05)<br>See paragraphs [0022]-[0038] and figures 2-3. | 1-13 |
| A | JP 2016-112872 A (TOYOTA MOTOR CORP.) 23 June 2016 (2016-06-23)<br>See paragraphs [0018]-[0020] and figure 1. | 1-13 |
| A | JP 2020-126763 A (ENVISION AESC ENERGY DEVICES LTD.) 20 August 2020 (2020-08-20)<br>See paragraphs [0026]-[0054] and figure 1. | 1-13 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 February 2024** | **29 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/019155**

| Patent document cited in search report | | | Publication date (day/month/year) | Patent family member(s) | | | Publication date (day/month/year) |
|---|---|---|---|---|---|---|---|
| KR | 10-1462332 | B1 | 14 November 2014 | KR 10-2014-0115410 | | A | 01 October 2014 |
| KR | 10-2004-0004946 | A | 16 January 2004 | None | | | |
| KR | 10-2014-0067795 | A | 05 June 2014 | KR | 10-1431019 | B1 | 18 August 2014 |
| JP | 2016-112872 | A | 23 June 2016 | None | | | |
| JP | 2020-126763 | A | 20 August 2020 | JP | 7270398 | B2 | 10 May 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220183576
- KR 1020230027508